Europäisches Patentamt

European Patent Office

Office européen des brevets

(19)

(11) Veröffentlichungsnummer: **0 224 709**

**A1**

(12) **EUROPÄISCHE PATENTANMELDUNG**

(21) Anmeldenummer: 86114826.0

(22) Anmeldetag: 24.10.86

(51) Int. Cl.4: **B62D 25/22** , A01D 67/00

(30) Priorität: 31.10.85 US 793605

(43) Veröffentlichungstag der Anmeldung:
10.06.87 Patentblatt 87/24

(84) Benannte Vertragsstaaten:
DE FR GB

(71) Anmelder: **DEERE & COMPANY**
**1 John Deere Road**
**Moline Illinois 61265(US)**

(72) Erfinder: **Schlueter, Francis Edward**
**6666 N.W. Fifth Street**
**Des Moines Iowa 50313(US)**
Erfinder: **Schreiner, Joel Marvin**
**1309 S.E. Rio Drive**
**Ankeny Iowa 50021(US)**

(74) Vertreter: **Sartorius, Peter et al**
**DEERE & COMPANY European Office, Patent**
**Department Postfach 503 Steubenstrasse**
**36-42**
**D-6800 Mannheim 1(DE)**

(54) **Verstellbare Plattform für ein Fahrzeug.**

(57) Eine Erntebergungsmaschine weist eine an Parallelogrammlenkern (52, 54) zwischen einer horizontalen und einer vertikalen Lage verschwenkbar angeschlossene Plattform (34) auf, an deren äußerer Seite ein als Schutzteil und als Geländer dienender Abdeckteil (32) mitverschwenkbar angeschlossen ist, der in der vertikalen Lage der Plattform (34) in der gleichen Ebene liegt und zur Abdeckung von an der Maschine vorgesehenen Antriebselementen (24) dient.

Fig. 3

EP 0 224 709 A1

## Verstellbare Plattform für ein Fahrzeug

Der Erfindung bezieht sich auf ein Fahrzeug mit aufrechtstehenden Seitenteilen, an denen eine Plattform schwenkbar angeschlossen und in einer vertikalen sowie horizontalen Lage festsetzbar ist, wobei zwischen der Plattform und den Seitenteilen Federelemente und mindestens ein Lenker wirken.

Es ist bereits ein Kraftfahrzeug bekannt (US-A-4 159 122), das an der vorderen Seite der Fahrerkabine eine zwischen einer horizontalen Lage und einer vertikalen Lage verstellbare Plattform aufweist, die an ihrem inneren Ende direkt mit der Stirnseite der Fahrerkabine verbunden ist und über ein zusätzliches Gestänge abgestützt wird, das einenends an die Stirnseite, anderenends an das äußere Ende der Plattform gelenkig angeschlossen ist. Zwischen den Anschlußstellen des Gestänges ist eine Feder vorgesehen, die als Zugfeder ausgebildet ist und die Plattform in der horizontalen Lage hält. Bei Verstellung der Plattform in die vertikale Position wird die Plattform gegen die Wirkung der Feder verstellt.

Demgegenüber liegt der Erfindung die Aufgabe zugrunde, die Plattform derart verschwenkbar an einen Seitenteil eines Fahrzeuges anzuschließen, daß eine mit der Plattform verbundene Schutzvorrichtung einmal als Schutzgitter und zum anderen als Abdeckvorrichtung dienen kann. Diese Aufgabe ist dadurch gelöst worden, daß die Plattform mittels Lenkeranordnungen an die Seitenteile des Fahrzeuges angeschlossen ist und einen Schutzteil trägt, der in beiden Stellungen der Plattform eine vertikale Lage einnimmt. Auf diese Weise kann bei Einnahme einer horizontalen Lage der Plattform der Schutzteil auch als Gitter dienen, wenn die Bedienungsperson Wartungsarbeiten auf der Plattform vornimmt. Sind jedoch die Wartungsarbeiten am Fahrzeug abgeschlossen, so läßt sich die Plattform gemeinsam mit der Schutzvorrichtung in eine vertikale Lage verschwenken, in der die am Fahrzeug zu schützenden Teile abgedeckt werden. Hierzu ist es vorteilhaft, daß die Plattform sowie die Schutzvorrichtung mittels Parallelogrammlenkern direkt an die Seitenteile des Fahrzeuges angeschlossen sind. Dabei ist es vorteilhaft, daß der Schutzteil rechtwinklig zu der Oberfläche der Plattform ausgerichtet ist, wenn diese ihre horizontale Lage eingenommen hat. Durch die vorteilhafte Positionierung der einzelnen Gelenkbolzen zur Verbindung der Parallelogrammlenker an dem Seitenteil des Fahrzeuges bzw. zum Anschluß des Schutzteiles an den Parallelogrammlenkern wird sichergestellt, daß der Schutzteil stets seine vertikale Lage einnimmt, gleich welche Stellung die Plattform eingenommen hat. In vorteilhafter Weise kann die durch die Gelenkbolzen verlaufende Verbindungslinie mit der Standfläche bzw. der horizontalen Ebene einen Winkel von ca. 45° einschließen.

Um die Abwärtsverschwenkung der Plattform zu begrenzen, ist es vorteilhaft, daß jeweils zwei Parallelogrammlenker in einer Ebene verlaufen, wobei sie bei Einnahme der horizontalen Lage der Plattform gegeneinander anliegen. Hierdurch wird die Abwärtsverschwenkung der Parallelogrammlenker und somit der Plattform begrenzt. Die Stellkräfte zur Verschwenkung der Plattform und des Schutzteiles können dadurch reduziert werden, daß zwischen den Gelenkbolzen eine Druckfeder wirkt, die so ausgelegt ist, daß bei Einnahme der horizontalen Lage der Plattform die Plattform nicht nach oben verschwenkt wird, wobei gleichzeitig die Druckfeder fast vollständig zusammengedrückt ist. Durch geringfügiges Anheben der Plattform entfaltet die Druckfeder ihre Wirkung und unterstützt den Schwenkvorgang der Plattform und des Schutzteiles nach oben. Um die Stellkräfte der Druckfeder zu verändern, kann diese auf einer Stange angeordnet sein und einenends gegen einen Flansch, anderenends gegen eine einstellbare Mutter anliegen. Weitere vorteilhafte Ausgestaltungen der Erfindung gehen aus den Unteransprüchen hervor.

Im folgenden wird die Erfindung anhand von lediglich einen Ausführungsweg darstellenden Zeichnungen näher erläutert. Es zeigt:

Fig. 1 ein Ladefahrzeug mit einer Ernteberbungsvorrichtung, beispielsweise eine Baumwollerntemaschine,

Fig. 2 eine Teilansicht entlang der Linie 2 -2 gemäß Fig. 1 und einen Teil einer Plattform mit einer Schutzvorrichtung in einer geschlossenen Position (durchgezogene Linien) und in einer Offenstellung (gestrichelte Linien),

Fig. 3 eine perspektivische Darstellung der Plattform mit der Schutzvorrichtung und einer Antriebsvorrichtung,

Fig. 4 eine Ansicht entlang der Linie 4 -4 gemäß Fig. 3.

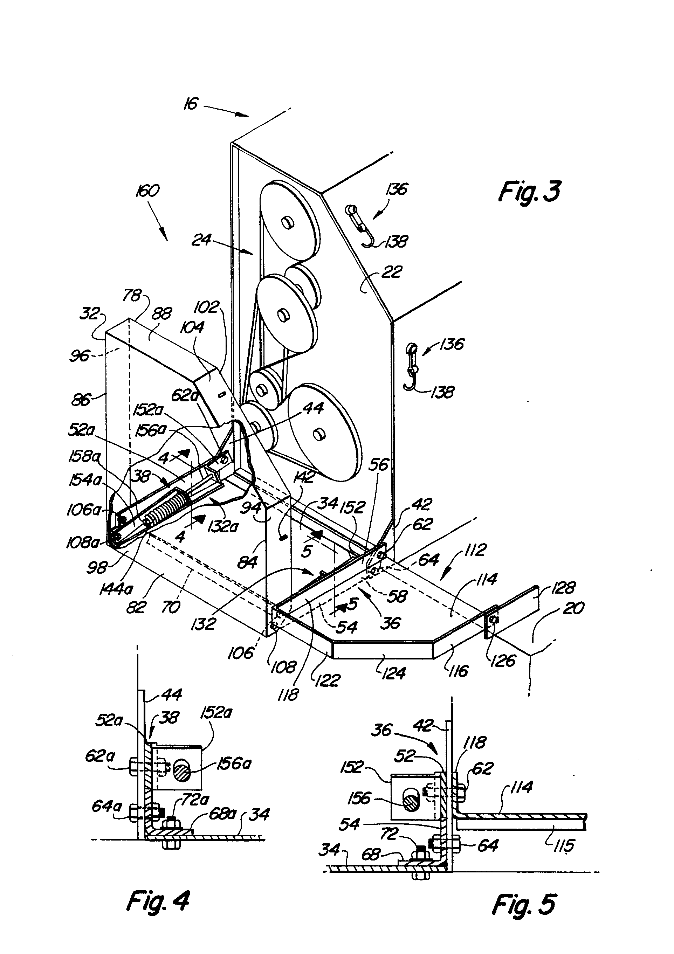

In der Zeichnung ist mit 10 eine landwirtschaftliche Maschine, beispielsweise eine Baumwollerntemaschine, bezeichnet, die an ihrem vorderen Ende mit einer Baumwollerntebergungsvorrichtung 12 ausgerüstet ist, die am Maschinengehäuse 14 angeschlossen ist und die Baumwolle einer Baumwollreinigungsvorrichtung 16 zuführt, die hinter einer Fahrerkabine 18 auf einem Rahmen 20 der Baumwollerntemaschine 10 angeordnet ist. Die Baumwollreinigungsvorrichtung 16 erstreckt sich nach außen auf eine Seite der Baumwollerntemaschine 10 und weist eine aufrechtstehende Seitenwand (siehe Fig. 3) auf, an der zahlreiche Keilriemenscheiben 24 einer Antriebsvorrichtung angeordnet sind, die anläßlich der Wartung leicht zugänglich sind. Eine verstellbare Schutzvorrichtung bzw. Plattform 28 ist an dem Rahmen 20 angeschlossen und zwischen einer Schließstellung bzw.

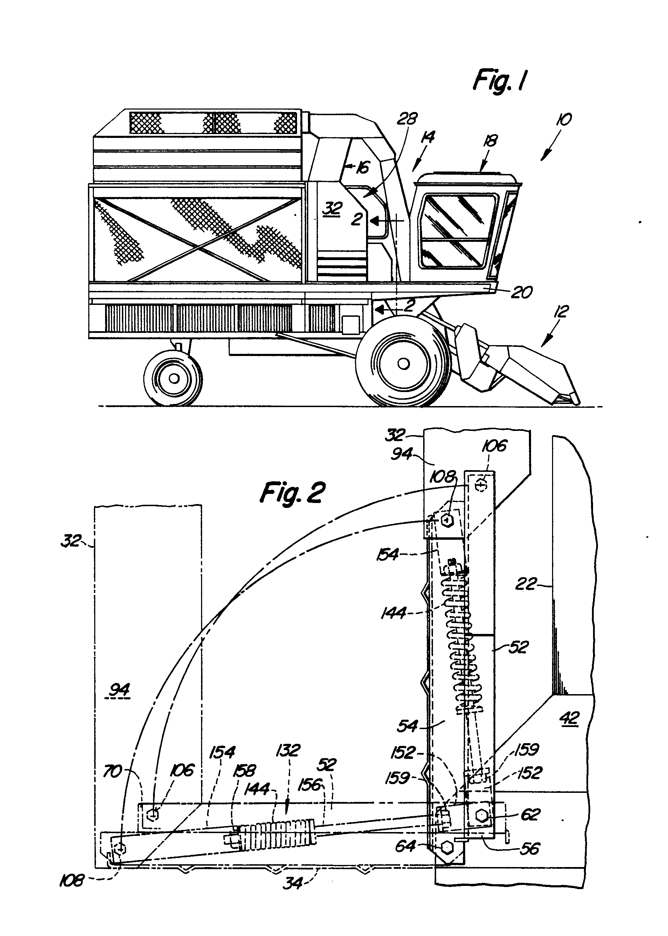

Schutzstellung (Fig. 1 -ausgezogene Linien und Fig. 2) zur Abdeckung der beweglichen Teile bzw. der Keilriemenscheiben 24 während des Feldeinsatzes und einer Offenstellung verstellbar - (gestrichelte Linien -Fig. 2 und Fig. 3). In der Offenstellung wird die Schutzvorrichtung 28 auch als Plattform benutzt, auf der eine Bedienungsperson während der Wartungsarbeiten stehen kann und somit einen leichten Zugang zu den zu wartenden Teilen der Antriebsvorrichtung hat. Obwohl die Schutzvorrichtung bzw. Plattform 28 für eine Baumwollerntemaschine dargestellt und beschrieben ist, kann sie auch an anderen Maschinen eingesetzt werden, die mit Zugmittelscheiben bzw. Zahnrädern ausgestattet sind und die während des Arbeitseinsatzes geschützt werden müssen, jedoch während der Wartungsarbeiten zugänglich sein sollen.

Die verstellbare Schutzvorrichtung bzw. Plattform 28 weist einen aufrechtstehenden Abdeckteil bzw. einen Schutzteil 32 auf, der mit seinem unteren Ende gelenkig an das obere Ende einer Plattform 34 angeschlossen ist. Die Plattform 34 ist wiederum mit ihrem unteren Ende an den Rahmen 20 der Baumwollerntemaschine. 10 angeschlossen und zwischen der in Fig. 2 dargestellten aufrechten Stellung und einer waagerechten Stellung (siehe Fig. 3) verschwenkbar. Wie aus Fig. 3 hervorgeht, sind vordere und hintere Lenkeranordnungen 36 und 38 mit ihren innenliegenden Enden an Halterungen 42 und 44 gelenkig angeschlossen und mit ihren äußeren Enden an den Abdeckteil bzw. Schutzteil 32. Die Lenkeranordnungen 36 und 38 sind jeweils als Parallelogrammlenker 52, 54 ausgebildet und dienen zur Verschwenkung des Schutzteiles 32 zwischen der in Fig. 3 dargestellten horizontalen Stellung und der in Fig. 2 dargestellten vertikalen Stellung. Die Lenkeranordnungen 36 und 38 bestehen, wie bereits erwähnt, aus jeweils zwei Parallelogrammlenkern 52 und 54, die derart angeordnet sind, daß sie sowohl in der horizontalen wie auch in der vertikalen Lage des Schutzteiles 32 gegeneinander anliegen. Die Schutzvorrichtung 28 ist derart ausgebildet, daß sie in der offenen sowie in der geschlossenen Stellung selbstarretierend ist, so daß keine weiteren Halterungen bzw. Sicherungselemente zur Sicherung des Schutzteiles 32 notwendig sind.

Die Halterungen 42 und 44 bestehen aus aufrechtstehenden Platten, die mit ihren innenliegenden Enden an den Rahmen 20 der Reinigungsvorrichtung 16 angeschlossen sind. Die beiden Lenkeranordnungen 36 und 38 sind spiegelbildlich angeordnet, so daß lediglich die vordere Lenkeranordnung 36 im Detail erläutert ist. Die Lenkeranordnung 36 besteht aus dem oberen Parallelogrammlenker 52 und dem mit Bezug auf die Horizontale darunter liegenden Parallelogrammlenker 54.

Die Parallelogrammlenker 52 und 54 sind in etwa gleich lang und weisen je ein innenliegendes Ende 56 und ein außenliegendes Ende 58 auf. In den Enden 56 und 58 der Parallelogrammlenker 52 und 54 sind zur Aufnahme von Gelenkbolzen 62 und 64 und zum Anschluß an die Halterungen 42 Bohrungen vorgesehen. Die Gelenkbolzen 62 und 64 liegen auf einer geneigt verlaufenden Ebene, die mit der Horizontalen einen Winkel von 45° einschließt. Wie aus Fig. 3 hervorgeht, liegt der Gelenkbolzen 62 dichter an der Seitenwand 22 an als der Gelenkbolzen 64. Der obere Parallelogrammlenker 52 besteht aus einem flachen Blechstreifen, während der untere Lenker 54 aus einem Winkelträger besteht, wobei der untere Flansch 68 des Parallelogrammlenkers gemäß Fig. 3 und 5 horizontal verläuft. Die vertikal verlaufende Seite des unteren Parallelogrammlenkers 54 liegt direkt unterhalb der vertikal verlaufenden Seite des oberen Parallelogrammlenkers 52 und liegt gegen diesen an, wenn sich die Parallelogrammlenker 52 und 54 entweder in der horizontalen Lage gemäß Fig. 3 oder in der vertikal verlaufenden Lage gemäß Fig. 2 befinden (ausgezogene Darstellung). Die Anordnung der Parallelogrammlenker 52 und 54 der Lenkeranordnung 38 gemäß Fig. 4 ist ähnlich der Anordnung der Fig. 5, so daß die gleichen Teile lediglich mit den gleichen Zahlen und entsprechenden Buchstaben gekennzeichnet sind. Die oberen Parallelogrammlenker 52 und 52a sind an ihren äußeren Enden an eine Querstrebe 70 angeschlossen, die mit dem vorderen Teil der Plattform 34 eine Winkelstrebe bildet.

Die Plattform 34 weist ein rippenverstärktes Paneel auf, das mittels Bolzen 72 und 72a an die Flansche 68, 68a der unteren Parallelogrammlenker 54 und 54a angeschlossen ist. Die Plattform 34 ist mittels der Lenkeranordnungen 36 und 38 zwanggeführt, so daß sie mit diesen um die Gelenkbolzen 62, 64 und 62a, 64a schwenken kann. Nehmen die Parallelogrammlenker 52 und 54 eine horizontale Lage ein, so liegen die Stirnkanten der oberen und unteren Parallelogrammlenker 52 und 54 bzw. 52a and 54a gegeneinander an und dienen somit als Tragvorrichtung für die Plattform 34.

Der Abdeckteil 32 besteht aus einem oberen Teil 78, einem unteren Teil 82, einem Frontteil 84 und einem Hinterteil 86. Der Frontteil 84 ist mit Abstand zu dem Hinterteil 86 angeordnet. Frontteil und Hinterteil sind durch Seitenwände 88, 96, 98 und 94 miteinander verbunden, die jeweils rechtwinklig zueinander angeordnet sind. Ein schräg verlaufender oberer Vorderteil 102 wird durch eine geneigt verlaufende Seitenwand 104 gebildet, die die Seitenwand 88 mit der Seitenwand 94 verbindet. Der Abdeckteil 32 kann jedoch lediglich aus dem Frontteil 84 und den Seitenwänden 94 bis 104 gebildet sein, so daß er in Richtung der Antriebselemente offen ist und diese umgibt, wenn er in seine Schließstellung gemäß Fig. 2 (ausgezogene Linien) verschwenkt worden ist. Auf diese Weise wird sichergestellt, daß alle Antriebselemente mittels des Schutzteiles 32 und der Plattform 34 abgedeckt sind.

Der untere Teil des Abdeckteiles 32 ist mittels Gelenkbolzen 106, 108 und 106a, 108a an die Parallelogrammlenker 52, 54 und 52a, 54a angeschlossen. Die Gelenkbolzen 106 bis 108 erstrecken sich durch die an den Enden der Parallelogrammlenker 52 bis 54 vorgesehenen Bohrungen und durch die unteren Teile der Seitenwände 94 und 96. Die Anschlußverbindung zwischen den Seitenwänden 94 und 96 und den äußeren Enden der Parallelogrammlenker erfolgt durch Gelenkbolzen 108, 108a sowie 106, 106a. Die Gelenkbolzen 108 liegen weiter vorne als die Gelenkbolzen 106. Sie sind auf gleiche Weise angeordnet wie die Gelenkbolzen 62 und 62a, so daß sie ebenfalls auf einer geneigt verlaufenden Ebene liegen. Die Lenkeranordnungen 36 und 38 gewährleisten, daß der Schutzteil 32 zwischen der vertikalen Lage in der Schließstellung und einer vertikalen Lage in der Offenstellung verschwenkbar ist. Dabei wirkt die Plattform 34 in der Schließstellung ebenfalls als Schutzvorrichtung für den unteren Teil der Seitenwand 22 (siehe ausgezogene Linien gemäß Fig. 2), während in der Offenstellung die Plattform 34 als Tragvorrichtung für eine Bedienungsperson dient, wobei der Schutzteil 32 die Plattform sicherheitshalber zur Seite hin begrenzt.

Um einen leichteren Zugang zu dem vorderen Teil der Schutzvorrichtung 28 sowie der Plattform 34 zu erhalten, ist eine zusätzliche Plattform 112 an den oberen Parallelogrammlenker 52 angeschlossen und mit diesem gemeinsam verschwenkbar. Die Plattform 112 weist ein unteres Paneel 114 (Fig. 5) mit einem nach unten gerichteten Flansch 115 sowie einem vorderen und hinteren aufrechtstehenden Flansch 116 und 118 auf, die mit dem Paneel 114 verbunden sind und sich rechtwinklig zu diesem erstrecken. Ein äußerer Flansch 122 ist an der äußeren Seite des Paneels angeordnet und rechtwinklig zu diesem ausgerichtet und verläuft in etwa auf der gleichen Querebene wie die Querstrebe 70. Der Flansch 122 ist einenends mit dem rechtwinklig dazu ausgerichteten Flansch 118 und mit einem diagonal verlaufenden Flansch 124 verbunden, der sich bis an das äußere Ende des Flansches 116 erstreckt und mit diesem fest verbunden ist. Der innenliegende Teil des Flansches 118 ist mittels eines Gelenkbolzens 62 gelenkig an die Halterung 42 angeschlossen, während das innenliegende Ende des Flansches 116 mittels eines Gelenkbolzens 126 an einer Halterung 128 fest angeschlossen ist, die mit dem Rahmen 20 fest verbunden ist. Der Gelenkbolzen 126 verläuft koaxial zum Gelenkbolzen 62, so daß die Plattform 112 um die durch die Gelenkbolzen 62 und 126 verlaufende Achse gemeinsam mit der Plattform 34 verschwenken kann. Das außenliegende Ende des Flansches 118 ist mittels des Gelenkbolzens 106 an die außenliegende Seitenwand 94 des Schutzteiles 32 angeschlossen. Im Ausführungsbeispiel sind die Parallelogrammlenker 52 und 54 der Lenkeranordnung 36 mit Bezug auf Fig. 3 links von der Seitenwand 94 und der Halterung 42 angeordnet, so daß der Flansch 118 von der außenliegenden Seite der Seitenwand 94 und der Halterung 42 getragen wird. Das untere Paneel 114 der Plattform 112 verläuft parallel zu der Plattform 34.

Um der Abwärtsbewegung der Schutzvorrichtung 28 entgegenzuwirken, wenn diese zwischen einer Offenstellung und einer Schließstellung verschwenkt wird, sind gemäß Fig. 3 bis 5 an die Lenkeranordnungen 36 und 38 Federelemente 132, 132a angeschlossen. Die Federelemente 132 und 132a ziehen die Schutzvorrichtung 28 in Richtung ihrer Schließstellung gemäß Fig. 1 (ausgezogene Linien), um die Stellkräfte zur Verschwenkung der Schutzvorrichtung 28 in ihrer Schließstellung zu reduzieren. Die Federelemente 132 und 132a dienen auch dazu, die Schutzvorrichtung 28 in ihrer Schließstellung zu halten. Es sind jedoch zusätzlich an der Reinigungsvorrichtung 16 Verriegelungselemente 136 mit je einem Haken 138 vorgesehen, die in entsprechende an den Seitenwänden 94 und 104 des Schutzteiles 32 vorgesehene Ösen einhängbar sind und die somit die Schutzvorrichtung 28 in ihrer geschlossenen Stellung sichern.

Die Federelemente 132 und 132a weisen Zugfedern 144, 144a auf, die zwischen den Gelenkbolzen 62, 108 und 62a, 108a wirken. Die Federn 144, 144a können beispielsweise als Druckfedern ausgebildet sein, um einenends an eine Winkelhalterung 152 bzw. 152a, anderenends an eine Winkelhalterung 154 bzw. 154a angeschlossen zu sein. Die Winkelhalterung 152 bzw. 152a ist mit dem Gelenkbolzen 62 bzw. 62a und die andere Winkelhalterung 154 bzw. 154a mit dem Gelenkbolzen 108 bzw. 108a verbunden. In den Winkelhalterungen 152, 152a und 154, 154a sind zur Aufnahme einer Stange 156 bzw. 156a Bohrungen vorgesehen, die sich durch diese erstrecken und mittels Schraubenmuttern 158 bzw. 158a gesichert sind. Auf der Stange 156, 156a ist zwischen den Schenkeln der Winkelhalterungen 152, 154 bzw. 152a, 154a die Druckfeder 144 bzw. 144a vorgesehen. Durch entsprechendes Drehen der Mutter 158 und 158a auf der Stange 156 bzw. 156a kann die Druckfeder 144 bzw. 144a (siehe Fig. 2) so weit zusammengepreßt werden, daß in der abgesenkten Stellung der Plattform 34 eine ausreichende Stellkraft zur Verfügung steht, die dazu beiträgt, die Plattform 34 zusammen mit dem Schutzteil 32 ohne weiteres anzuheben.

Um die Verstellung der Schutzvorrichtung 28 zu erleichtern, kann an der oberen Seitenwand 104 ein Handgriff 160 angeordnet werden. Im Arbeitseinsatz wird die Schutzvorrichtung 28 zusammen mit dem Schutzteil 32 in die in Fig. 1 in aus gezogenen Linien dargestellte Stellung verschwenkt, in der die beweglichen Antriebselemente, beispielsweise die Keilriemenscheiben 24, vollständig abgedeckt sind, wobei die Lenkeranordnungen 36 und 38 ebenfalls als Schutzvorrichtungen dienen. Möchte die Bedienungsperson die beweglichen Antriebselemente bzw. die Keilriemenscheiben 24 warten, so werden die Haken 138 der Verriegelungselemente 136 aus den Ösen 142 des Schutzteiles 32 herausgenommen, so daß dann die Bedienungsperson den Schutzteil 32 von der Seitenwand 22 wegschwenken kann, wobei die Lenkeranordnungen 36 und 38 um die Gelenkbolzen 62, 62a und 64, 64a schwenken. Wird der Schutzteil 32 von der Seitenwand des Ladefahrzeuges 10 weggeschwenkt, so halten die Parallelogrammlenker 52 und 54 den Schutzteil 32 in einer vertikal verlaufenden Ebene (siehe gestrichelte Linien gemäß Fig. 2). Da die Gelenkbolzen 108, 108a um die Gelenkbolzen 62, 62a schwenken, wird die Plattform 34 in eine horizontale Lage verschwenkt, wobei die Federn 144, 144a zusammengedrückt werden und eine Gegenkraft ausüben, die als Gegengewicht zum Gewicht der Schutzvorrichtung dient, wenn die Schutzvorrichtung 28 von der Seitenwand 22 weggeschwenkt wird. Die Muttern 158, 158a werden so weit angezogen, daß eine ausreichende Federstellkraft zur Verfügung steht, die jedoch so groß ist, daß die Schutzvorrichtung 28 die in Fig. 2 in gestrichelten Linien dargestellte Stellung einnehmen und beibehalten kann. Die an der Plattform 34 angeordnete Plattform 112 wird mit der Plattform 34 aus der Stellung gemäß Fig. 1 in die Stellung gemäß Fig. 3 verschwenkt, wozu der Handgriff 160 zu Hilfe genommen werden kann. In der aufrechten Lage der Plattform 112 deckt die Plattform 112 den rechten Teil der Baumwollerntemaschine 10 zwischen der Reinigungsvorrichtung 16 und der Fahrerkabine 18 ab. In der Offenstellung wirkt der Schutzteil 32 gemäß Fig. 2 als Gitter für eine Bedienungsperson, die beispielsweise auf der Plattform 34 Wartungsarbeiten ausführt. Somit bildet die Plattform 34 in Verbindung mit der Schutzvorrichtung 28 einen Bedienungsstand 160 zwischen dem Schutzteil 32 und der Seitenwand 22. Nach den durchgeführten Wartungsarbeiten an den Antriebselementen, beispielsweise an den Keilriemenscheiben 24, wird die bewegliche Schutzvorrichtung 28 angehoben und in eine in Fig. 1 dargestellte Schließstellung gebracht, wobei anschließend die Haken 138 der Verriegelungselemente 136 in die Ösen 142 eingehängt werden, um eine Sicherung der Schutzvorrichtung in der angehobenen bzw. in der Schließstellung zu gewährleisten.

## Ansprüche

1. Fahrzeug mit aufrechtstehenden Seitenteilen (22), an denen eine Plattform (34) schwenkbar angeschlossen und in einer vertikalen sowie horizontalen Lage festsetzbar ist, wobei zwischen der Plattform (34) und den Seitenteilen (22) Federelemente (132, 132a) und mindestens ein Lenker wirken, dadurch gekennzeichnet, daß die Plattform (34) mittels Lenkeranordnungen (36, 38) an die Seitenteile (22) angeschlossen ist und einen Schutzteil (32) trägt, der in beiden Stellungen der Plattform (34) eine vertikale Lage einnimmt.

2. Fahrzeug nach Anspruch 1, dadurch gekennzeichnet, daß die Lenkeranordnungen (36, 38) als Parallelogrammlenker (52, 54) ausgebildet sind, mittels derer die Plattform (34) an den Seitenteilen (22) zwischen der horizontalen Lage, in der die Plattform (34) als Bedienungsstand dient, und einer vertikalen Lage verschwenkbar ist, in der die Plattform (34) zusammen mit dem Schutzteil (32) als Schutzvorrichtung für an dem Fahrzeug vorgesehene Teile, beispielsweise Antriebselemente, dient.

3. Fahrzeug nach Anspruch 1 und 2, dadurch gekennzeichet, daß der Schutzteil (32) an den Parallelogrammlenkern (52, 54) schwenkbar angeschlossen ist und in der horizontalen Lage der Plattform (34) sich in etwa rechtwinklig zu dieser erstreckt und in der vertikalen Lage der Plattform in etwa in der gleichen Ebene liegt wie die Plattform (34).

4. Fahrzeug nach einem oder mehreren der vorherigen Ansprüche, dadurch gekennzeichnet, daß der Schutzteil (32) mittels Gelenkbolzen (106, 108, 106a, 108a) an die außenliegenden Enden der Parallelogrammlenker (52, 54) schwenkbar angeschlossen ist und mittels dieser von einer ersten vertikalen Lage in eine zweite vertikale Lage verschwenkbar ist.

5. Fahrzeug nach Anspruch 1, dadurch gekennzeichnet, daß die Lenkeranordnungen (36, 38) aus je zwei im Bereich der seitlichen Begrenzung der Plattform (34) angeordneten Parallelogrammlenkern (52, 54) gebildet sind.

6. Fahrzeug nach einem oder mehreren der vorherigen Ansprüche, dadurch gekennzeichnet, daß die Gelenkbolzen (62 und 64) zum Anschluß der Plattform (34) bzw. der Parallelogrammlenker - (52, 54) an den Seitenteil (22) des Fahrzeuges - (10) und die Gelenkbolzen (106, 108) zum Anschluß des Schutzteiles (32) an die Parallelogrammlenker auf einer geneigt verlaufenden Ebene liegen, die mit Bezug auf die Standfläche des Fahrzeuges einen spitzen Winkel einschließt.

7. Fahrzeug nach Anspruch 5, dadurch gekennzeichnet, daß jeweils zwei Parallelogrammlenker - (52, 54) in einer Ebene angeordnet sind und in der horizontalen sowie in der vertikalen Lage der Plattform (34) gegeneinander anliegen.

8. Fahrzeug nach Anspruch 5, dadurch gekennzeichnet, daß zur erleichterten Verstellung der Plattform (34) mindestens ein Federelement (132, 132a) vorgesehen ist, das mit seinem außenliegenden Ende an den äußeren Gelenkbolzen (108) des mit Bezug auf die horizontale Lage der Plattform (34) unteren Parallelogrammlenkers - (54) und mit dem innenliegenden Ende an den inneren Gelenkbolzen (62) des oberen Parallelogrammlenkers (52) gelenkig angeschlossen ist.

9. Fahrzeug nach Anspruch 8, dadurch gekennzeichnet, daß das Federelement (132, 132a) aus einer zusammendrückbaren Feder (144) besteht, die auf einer mit dem inne ren Gelenkbolzen (62) gelenkig verbundenen Stange (156) angeordnet ist und einenends gegen eine auf das Ende der Stange aufschraubbare Mutter (158) und anderenends gegen eine Winkelhalterung (154) anliegt, die einenends auf der Stange (156) geführt, anderenends mit äußeren Gelenkbolzen (108) verbunden ist.

10. Fahrzeug nach Anspruch 8, dadurch gekennzeichnet, daß an die Gelenkbolzen (62, 106) des einen oberen Parallelogrammlenkers (52) eine weitere Plattform (112) mitverschwenkbar angeschlossen ist, die mittels eines mit Abstand zum Parallelogrammlenker (52) angeordneten Flansches (116) an eine am Maschinengehäuse angeordnete Halterung (128) gelenkig angeschlossen ist.

11. Fahrzeug nach Anspruch 8, dadurch gekennzeichnet, daß die erste und zweite Plattform - (34 und 112) auf der gleichen Ebene verlaufen.

12. Fahrzeug nach Anspruch 5 und 11, dadurch gekennzeichnet, daß die Parallelogrammlenker (52, 54) die gleiche Länge aufweisen und die seitliche Begrenzung der ersten Plattform (34) bilden.

13. Fahrzeug nach Anspruch 4, dadurch gekennzeichnet, daß der aus einem Boden und darauf rechtwinklig angeordneten Seitenwänden gebildete Schutzteil (32) zwischen den Parallelogrammlenkern (52, 54) aufgenommen und geringfügig kleiner als die Plattform (34) ist.

14. Fahrzeug nach Anspruch 13, dadurch gekennzeichnet, daß die außenliegende Begrenzung des Schutzteiles (32) als Handgriff ausgebildet ist.

*Fig. 1*

*Fig. 2*

Fig. 3

Fig. 4

Fig. 5

## EINSCHLÄGIGE DOKUMENTE

EP 86114826.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>US - A - 4 348 045</u> (HORI)<br>* Fig. 1,2,5 *<br><br>-- | 1 | B 62 D 25/22<br>A 01 D 67/00 |
| D,A | <u>US - A - 4 159 122</u> (STEVENS)<br>* Gesamt *<br><br>-- | 1 | |
| A | <u>AT - B - 375 238</u> (WINKELBAUER)<br>* Fig. 2,3 *<br><br>---- | | |

RECHERCHIERTE SACHGEBIETE (Int. Cl.4)

B 62 D

A 01 D

B 60 R

F 16 P

Der vorliegende Recherchenbericht wurde für alle Patentansprüche erstellt.

| Recherchenort | Abschlußdatum der Recherche | Prüfer |
|---|---|---|
| WIEN | 23-02-1987 | SCHMICKL |